# DEMANDE DE BREVET EUROPEEN

(11) **EP 2 238 841 A1**
(43) Date de publication de la demande: **13.10.2010**
(21) Numéro de dépôt: 10159378.8
(22) Date de dépôt: 08.04.2010
(51) Int. Cl.: A23K 1/18, A23K 1/14

(54) **Composition alimentaire à base végétale adaptée à l'alimentation des équidés**

(30) Priorité: 09.04.2009 FR 0901750
(71) Demandeur: Thiroin, Hubert, 28130 Maintenon (FR); Thiroin, David, 28130 Maintenon (FR)
(72) Inventeur: Thiroin, Hubert, 28130 Maintenon (FR); Thiroin, David, 28130 Maintenon (FR)
(74) Mandataire: L'Helgoualch, Jean

(57) **Abrégé**

La présente invention concerne une composition alimentaire à base végétale adaptée à l'alimentation des équidés, **caractérisée en ce qu**'elle comprend en combinaison du foin et des céréales, avec une teneur en humidité comprise entre 20 % et 40 % en poids.

## Description

La présente invention concerne une nouvelle composition alimentaire destinée à l'alimentation des équidés.

On sait que, dans la nature, le cheval est exclusivement herbivore et se nourrit essentiellement d'herbe dont la composition comprend principalement des graminées, ainsi que des légumineuses et des plantes diverses. En écurie, l'alimentation des chevaux peut être constituée de céréales telles que l'avoine et l'orge, et d'aliments produits par l'industrie agro-alimentaire tels que des granulés, ou encore des fourrages, principalement constitués de foin, de luzerne ou de paille.

L'appareil digestif du cheval est relativement peu volumineux, et par exemple le volume de l'estomac d'un cheval adulte est de l'ordre de 15 à 20 litres, et il est donc nécessaire que son alimentation soit fractionnée ou étalée au long de la journée. C'est ce qui explique qu'un cheval en liberté puisse passer quinze à seize heures par jour à brouter, et qu'un cheval en écurie nécessite 3 à 4 repas par jour.

La première étape de la digestion s'effectue sous l'action de la salive qui contient une enzyme digestive, l'amylase. Les granulés nécessitent environ quatre fois leur poids en salive, les céréales environ une fois, et les fourrages verts environ la moitié de leur poids. La digestion se poursuit dans l'estomac sous l'action des sucs gastriques. Au contraire des ruminants, l'intestin du cheval ne possède pas un volume suffisant pour stocker de grandes quantités de nourriture ce qui lui impose donc de fractionner et multiplier ses repas.

Pour qu'un cheval puisse se nourrir exclusivement d'herbe, il faut disposer en moyenne d'un hectare par cheval. Pour des surfaces plus faibles, l'alimentation du cheval doit être complétée par des rations de granulés, de céréales ou de fourrages.

Les granulés sont des aliments composés en fonction des besoins alimentaires des chevaux, qui dépendent en particulier de leur taille, de leur âge, de leur sexe et de leur activité. Ils peuvent être utilisés comme aliment principal, voire exclusif, ou comme complément.

Les céréales destinées à l'alimentation des chevaux comprennent généralement de l'avoine, de l'orge, du maïs, et parfois du seigle, du son ou du lin.

Les fourrages comprennent principalement du foin, qui peut provenir d'herbes, de graminées ou de légumineuses, et de la paille.

La qualité du foin dépend de plusieurs facteurs, en particulier du stade de fauchage et des conditions de récolte et de séchage des herbes. La paille est la partie de la tige de certaines céréales telles que blé, orge, avoine et seigle, coupée lors de la moisson et débarrassée des grains.

Cette alimentation doit être complétée par une quantité suffisante d'eau, de l'ordre de 20 à 40 litres par jour, pour un cheval adulte.

Certains fourrages composés associent du foin et des grains. On trouve également sur le marché des fourrages compactés enrichis en levure favorisant la digestion. La demande de brevet GB 2.406.516 décrit une composition alimentaire pour chevaux associant de l'herbe, du mucilage et des graisses, présentant une action thérapeutique sur les ulcères gastriques. Si les granulés sont généralement composés et dosés pour apporter au cheval les nutriments qui lui sont nécessaires, ils ont l'inconvénient d'être absorbés trop rapidement, et il est donc préférable d'apporter à l'animal une alimentation aussi proche que possible d'une nourriture naturelle.

Les études et essais réalisés par les inventeurs de la présente invention ont montré que d'excellents résultats pouvaient être obtenus au moyen d'une composition à base végétale comprenant une teneur minimale en humidité.

Ainsi, la présente invention a pour objet une nouvelle composition alimentaire à base végétale destinée aux équidés associant du foin et des céréales, possédant un taux d'humidité approprié, présentée dans une forme facile à manipuler et à stocker.

L'invention a aussi pour objet une composition alimentaire à base végétale plus particulièrement destinée aux chevaux, associant du foin et des céréales, de préférence du maïs, avec une teneur en humidité comprise entre 20 % et 40 % en poids.

Cette composition a l'avantage d'être prête à l'emploi puisqu'elle ne comprend pas nécessairement l'ajout supplémentaire de pré-mélange ou de concentré additionnel, du type concentré d'énergie à base de maïs et/ou concentré de protéines à base de farine de soja.

La composition de l'invention est tout particulièrement adaptée à l'alimentation, exclusive ou complémentaire, des équidés tels que le cheval, l'âne, le poney et le zèbre.

Le foin utilisé dans la présente invention est de préférence un foin d'origine naturelle associant des graminées et des légumineuses. Par exemple on peut utiliser du foin fraîchement coupé provenant de ray-grass, fétuque, fléole et dactyle. Le foin est généralement disponible sous forme de balles ou de bottes de plusieurs tailles et est principalement utilisé comme alimentation des troupeaux en hiver. La qualité des foins varie sensiblement suivant les conditions de récolte et de séchage. Certains foins bénéficient d'une appellation d'origine, comme le foin de Crau provenant de prairies délimitées et entretenues suivant des règles strictes.

On peut utiliser avantageusement un foin enrubanné disponible dans le commerce sous forme de bottes enveloppées dans un film plastique présentant l'avantage de limiter la fermentation. Le foin enrubanné est exempt de poussières et présente un taux d'humidité de l'ordre de 20 à 60 % en poids.

Le foin représente entre 30 et 80 % en poids de la composition totale, et de préférence entre 40 et 65 % en poids. La proportion de foin varie en fonction de l'état de l'animal et par exemple elle peut être d'environ 60 % en poids dans le cas d'un cheval en convalescence et de 45 % en poids environ dans le cas d'un cheval de sport.

Les céréales sont choisies parmi le maïs, l'orge, l'avoine, le seigle, et représentent d'une manière générale entre 10 et 50 % en poids de la composition totale, compte tenu de leur teneur en eau, généralement comprise entre 10 et 50 % en poids par rapport au poids total des céréales entrant dans la composition.

Le maïs utilisé dans la composition de l'invention est du maïs humide dont la teneur en eau est généralement comprise entre 20 et 50 % en poids. Il est possible d'utiliser en combinaison plusieurs formes de maïs telles que maïs en flocons, maïs doux, maïs expansé, mais il est préférable que la teneur en eau soit d'au moins 20 % en poids pour l'ensemble des maïs.

La proportion de maïs dans la composition est de l'ordre de 10 à 50 % en poids de la composition totale, et de préférence entre 20 et 40 % en poids.

Il est avantageux d'ajouter à la composition décrite ci-dessus des compléments alimentaires connus, et par exemple des protéines, des oligo-éléments, des vitamines, des minéraux, des sucres et des anti-oxydants.

Les minéraux peuvent être par exemple du calcium, du phosphore, du magnésium. Ces minéraux peuvent être apportés par des sels tels que carbonate de calcium, phosphate de calcium ou phosphate de sodium.

Les oligo-éléments qui peuvent être avantageusement utilisés dans les compositions de l'invention peuvent être choisis par exemple parmi le fer, le zinc, le manganèse, le cuivre, le sélénium et le magnésium. Ils sont disponibles dans le commerce sous diverses formes utilisables dans la présente invention.

Des sucres peuvent être ajoutés dans la composition, par exemple sous forme de dextrose ou de mélasse. Les protéines qu'il peut être utile d'apporter peuvent provenir par exemple de graines de lin ou de soja, par exemple sous forme de tourteau.

Les vitamines sont choisies de préférences parmi les vitamines C (acide ascorbique), E (tocophérol), PP (nicotinamide), B1 (thiamine), B6 (pyridoxine), B12 (cobalamine) et de la vitamine B8 (biotine). Certaines vitamines, comme la vitamine C et la vitamine E, peuvent aussi servir d'antioxydant et ont un effet favorable sur la protection des cellules de la paroi stomacale.

Les compositions contiennent aussi de préférence des huiles végétales, telles que des huiles de colza, de lin ou de tournesol dans des proportions qui peuvent varier de 1 à 10 % en poids environ. Il est également utile d'ajouter des sucres, et notamment des sucres lents, à la composition.

Par contre, la composition de l'invention peut avantageusement ne pas comprendre de diacétate de sodium et/ou de lactosérum, notamment de lactosérum déshydraté.

Les compositions de l'invention sont préparées de la manière suivante. On rassemble du foin provenant de préférence de champs d'herbe non pâturés, fraîchement coupé, on y ajoute les céréales, le maïs, les tourteaux, les huiles et les compléments minéraux vitaminés, et le mélange est ensuite pressé et formé en bottes de 20 à 40 kg. Dans le cas d'utilisation de foin enrubanné sous film plastique, le film est enlevé avant d'effectuer le mélange avec le maïs

Les compositions suivant l'invention sont de préférence présentées en bottes enveloppées dans un emballage substantiellement imperméable à l'air et à l'humidité afin de maintenir un taux d'humidité approprié tout en limitant les risques de fermentation. On peut utiliser par exemple des films plastiques disponibles dans le commerce.

Les compositions sont adaptées en fonction du type de cheval auquel elles sont destinées. Ainsi par exemple, on peut diminuer sensiblement la teneur en soja pour un cheval de sport ou en convalescence par rapport à un cheval de course.

Les compositions de l'invention peuvent être utilisées comme aliment principal ou comme complément de granulés ou de fourrage, ou en alternance avec des aliments classiques pour les équidés. Lorsqu'elle sont utilisées comme seul aliment, les rations quotidiennes sont généralement de l'ordre de 4 à 9 kg par jour pour un cheval adulte, réparties en 3 ou 4 repas, accompagnées d'eau.

Les compositions alimentaires pour chevaux de la présente invention présentent l'avantage de procurer à l'animal une alimentation proche de la nature, de favoriser la salivation et la digestion, et de procurer un excellent temps de rétention dans l'estomac facilitant l'espacement des repas au cours de la journée. L'utilisation des compositions de l'invention vise ainsi exclusivement l'alimentation des équidés, et ne pourrait donc pas être adaptée à d'autres animaux tels que par exemple les ruminants.

L'utilisation régulière des compositions de l'invention dans le cadre d'essais a montré qu'elles sont bien acceptées par les chevaux et qu'elles favorisent leur équilibre alimentaire. Leur bon état sanitaire est visible au comportement physique et psychique de l'animal et au lustre de sa robe.

Les exemples suivants illustrent l'invention sans en limiter la portée. Sauf indication contraire, tous les pourcentages et parties sont exprimés en poids.

### Exemple 1

On prépare une composition alimentaire pour chevaux constituée comme indiqué ci-après:

| | % brut | % matière sèche |
|---|---|---|
| soja | 7,00 | 6,16 |
| maïs humide | 20,00 | 12,00 |
| maïs | 15,00 | 12,90 |
| minéraux, vitamines et | | |
| oligo-éléments | 1,50 | 1,50 |
| huile | 2,00 | 2,00 |
| sucre | 4,00 | 3,44 |
| foin (enrubanné) | 50,50 | 37,88 |

Une telle composition est plus particulièrement destinée aux chevaux ayant une activité sportive.

### Exemple 2

On prépare une composition alimentaire pour chevaux constituée comme indiqué ci-après:

| | % brut | % matière secne |
|---|---|---|
| soja | 12,00 | 10,56 |
| maïs humide | 20,00 | 12,00 |
| maïs | 15,00 | 12,90 |
| minéraux, vitamines et oligo-éléments | 1,50 | 1,50 |
| huile | 2,00 | 2,00 |
| sucre | 2,00 | 1,72 |
| foin (enrubanné) | 47,50 | 35,63 |

Une telle composition est plus particulièrement destinée aux chevaux d'élevage.

### Exemple 3

On prépare une composition alimentaire pour chevaux constituée comme indiqué ci-après:

| | % brut | % matière sèche |
|---|---|---|
| soja | 10,00 | 8,80 |
| maïs humide | 20,00 | 12,00 |
| maïs | 20,00 | 17,20 |
| minéraux, vitamines et oligo-éléments | 1,50 | 1,50 |
| huile | 7,00 | 7,00 |
| sucre | 1,00 | 0,86 |
| foin (enrubanné) | 40,50 | 30,38 |

Une telle composition est plus particulièrement destinée aux chevaux ayant une activité susceptible d'occasionner des efforts intenses.

## Revendications

1. Composition alimentaire à base végétale adaptée à l'alimentation des équidés, **caractérisée en ce qu'**elle comprend en combinaison du foin et des céréales, avec une teneur en humidité comprise entre 20 % et 40 % en poids.

2. Composition selon la revendication 1, **caractérisée en ce que** le foin représente entre 30 et 80 % en poids de la composition totale.

3. Composition selon la revendication 2, **caractérisée en ce que** la teneur en humidité du foin est comprise entre 20 et 60 % en poids.

4. Composition selon la revendication 1, **caractérisée en ce que** les céréales représentent entre 10 et 50 % en poids de la composition totale.

5. Composition selon la revendication 4, **caractérisée en ce que** la teneur en humidité des céréales est comprise entre 10 et 50 % en poids.

6. Composition selon l'une quelconque des revendications 4 et 5, **caractérisée en ce que** les céréales sont choisies parmi le maïs, l'orge, l'avoine, et le seigle.

7. Composition selon l'une quelconque des revendications précédentes, **caractérisée en ce qu'**elle comprend en outre des compléments alimentaires choisis parmi des protéines, des oligo-éléments, des vitamines, des minéraux, des sucres, des huiles végétales et des anti-oxydants.

8. Composition selon l'une quelconque des revendications précédentes, **caractérisée en ce qu'**elle est présentée en bottes enveloppées dans un emballage substantiellement imperméable à l'air et à l'humidité.

9. Composition selon l'une quelconque des revendications précédentes, **caractérisée en ce qu'**elle est adaptée à l'alimentation des équidés choisis parmi le cheval, l'âne, le poney et le zèbre.

10. Utilisation de la composition telle que définie aux revendications 1 à 9 pour l'alimentation des équidés.
